(19) **Europäisches Patentamt**
**European Patent Office**
**Office européen des brevets**

(11) **EP 1 739 408 A2**

(12) **EUROPEAN PATENT APPLICATION**

(43) Date of publication:
**03.01.2007 Bulletin 2007/01**

(51) Int Cl.:
*G01N 21/64* (2006.01)

(21) Application number: **06012864.2**

(22) Date of filing: **22.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.06.2005 JP 2005188212**

(71) Applicant: **Olympus Corporation Tokyo 151-0072 (JP)**

(72) Inventors:
• **Ariga, Naohira**
  **Hachioji-shi**
  **Tokyo 192-0916 (JP)**
• **Arai, Yujin**
  **Setagaya-ku**
  **Tokyo 159-0057 (JP)**

(74) Representative: **von Hellfeld, Axel**
  **Wuesthoff & Wuesthoff**
  **Patent- und Rechtsanwälte**
  **Schweigerstrasse 2**
  **81541 München (DE)**

(54) **Camera apparatus**

(57) A camera apparatus includes an imaging device which includes a plurality of color filters with respective wavelength characteristics; a processing unit for carrying out an operation for separating luminance data per each label fluorochrome from the luminance data of each of the color filters by using the luminance data of each of the color filters which is obtained by the imaging device imaging a sample stained with a plurality of label fluorochromes having respective wavelength characteristics and using spectrum data relating to the label fluorochrome obtained based on a spectrum of the label fluorochrome and that of each of the color filters.

EP 1 739 408 A2

**Description**

**Background of the Invention**

**Field of the Invention**

The present invention relates to a camera apparatus suitable for observing a multiple fluorochrome-labeled sample.

**Description of the Related Art**

A conventional method for observing a multiple fluorochrome-labeled sample by each label fluorochrome without a crosstalk includes one for separating an image by each label fluorochrome by an image process after obtaining the image. As another method, a patent document 1 (i.e., a Laid-Open Japanese Patent Application Publication No. 08-62123) has disclosed a method for obtaining an image while changing over an excitation wavelength and a detection channel for each of label fluorochromes. Yet another method has been disclosed by a non-patent document 1 (i.e., "Multi-Spectral Imaging and Linear Unmixing Add a Whole New Dimension to Laser Scanning Fluorescence Microscopy": BioTechniques; Vol.31, No.6 (2001), p.1272-1278, coauthored by M.E. Dickinson, G. Bearman, S. Tille1, R. Lansford, and S.E. Fraser) using a Confocal Laser Scanning Microscope (LSM).

**Summary of the Invention**

According to an aspect of the present invention, a camera apparatus includes an imaging device which includes a plurality of color filters with respective wavelength characteristics; a processing unit for carrying out an operation for separating luminance data per each label fluorochrome from the luminance data of each of the color filters by using the luminance data of each of the color filters which is obtained by the imaging device imaging a sample stained with a plurality of label fluorochromes having respective wavelength characteristics and using spectrum data relating to the label fluorochrome obtained based on a spectrum of the label fluorochrome and that of each of the color filters; and an output unit for outputting luminance data separated per each of the label fluorochromes by the operation of the processing unit as an image which is separated per each of the label fluorochromes.

**Brief Description of the Drawings**

Fig. 1 is a diagram showing a fundamental comprisal of a camera apparatus according to a first embodiment;
Fig. 2 is a diagram showing color filters with a plurality of wavelength characteristics included by an imaging device;
Fig. 3 is a diagram for describing a calculation method for spectrum data $Y_i$ (where i= 1, 2, 3) relating to a label fluorochrome;
Fig. 4 is a flow chart showing an operation of the camera apparatus according to the first embodiment;
Fig. 5 is a diagram for describing a process of a processing unit according to the first embodiment;
Fig. 6 is a fundamental comprisal of a camera apparatus according to a modified example of the first embodiment;
Fig. 7 is a flow chart showing an operation of the camera apparatus according to the modified example of the first embodiment;
Fig. 8 is a flow chart showing an operation of a camera apparatus according to a second embodiment; and
Fig. 9 is a diagram describing a process of a processing unit according to the second embodiment.

**Description of the Preferred Embodiments**

The following is a detailed description of the preferred embodiment of the present invention by referring to the accompanying drawings.

[First Embodiment]

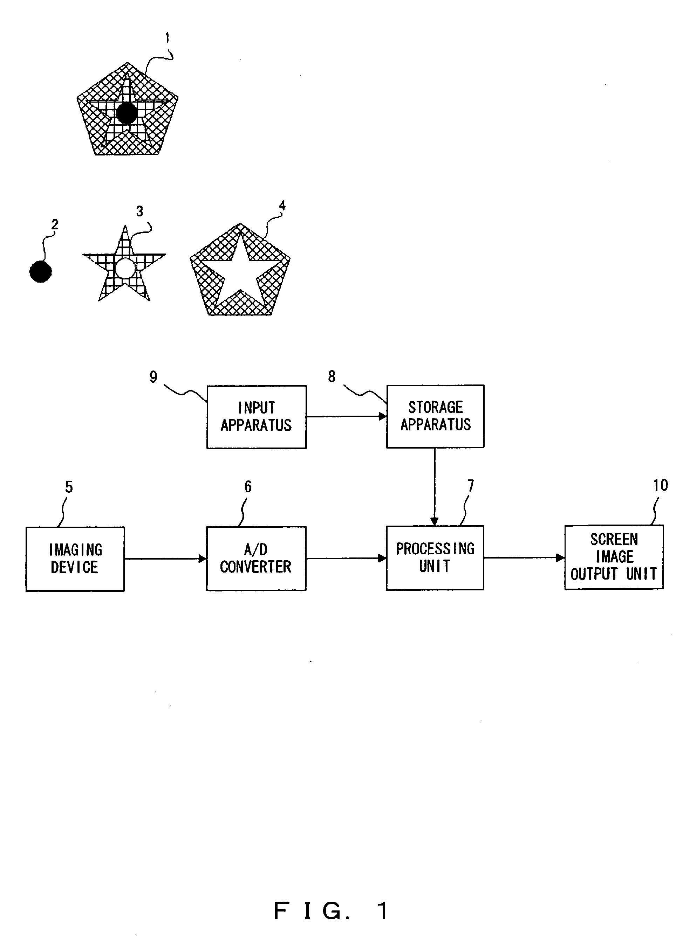

Fig. 1 is a diagram showing a fundamental comprisal of a camera apparatus according to a first embodiment of the present invention.
Referring to Fig. 1, a sample 1 is a multiple fluorochrome-labeled sample in which a part 2 is one stained (i.e., labeled) with a label fluorochrome $R_1$, a part 3 is one stained with a label fluorochrome $R_2$ and a part 4 is one stained with a label fluorochrome $R_3$.

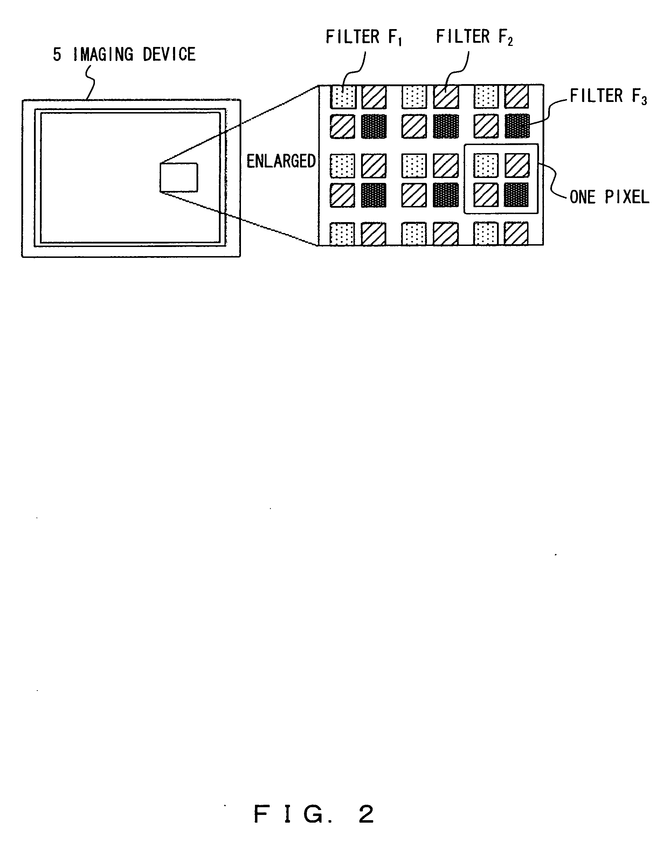

An imaging device 5 is for example a CCD, a CMOS image sensor, et cetera, having a plurality of color filters with different wavelength characteristics. The present embodiment is configured to adopt three color filters $F_i$ (where i= 1, 2, 3) with mutually different wavelength characteristics, which are arrayed as shown in Fig. 2, for the aforementioned plurality of color filters with different wavelength characteristics.

An A/D converter 6 converts an output signal from the imaging device 5 into discrete data per each of the color filters $F_i$ (where i= 1, 2, 3). A processing unit 7 performs an operation for separating luminance data per each label fluorochrome from the discrete data (i.e., luminance data) of each of the color filters $F_i$ (where i= 1, 2, 3) by a later described method.

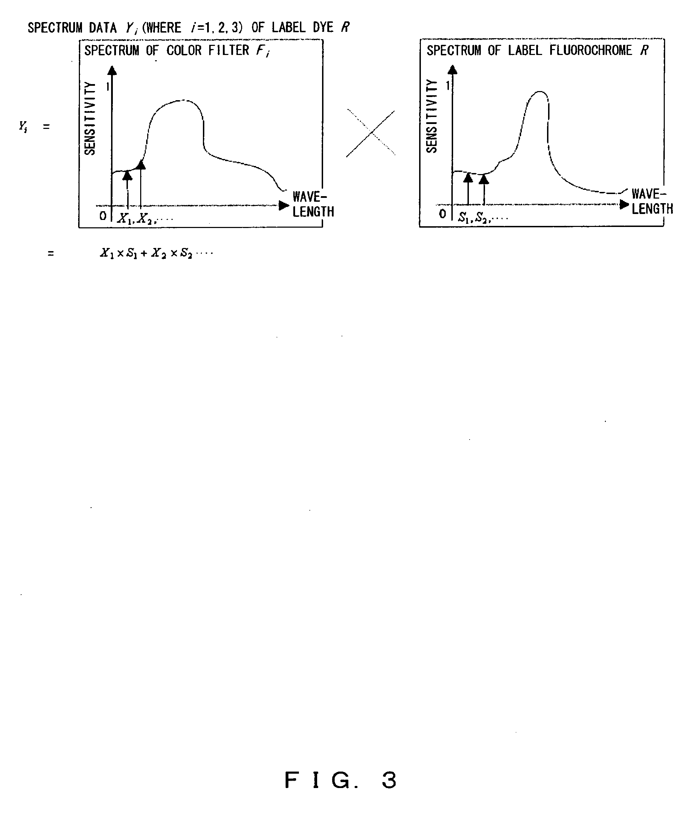

A storage apparatus 8 stores, for each label fluorochrome, spectrum data $Y_i$ (where i= 1, 2, 3) which is the product of a spectrum $\{X_{ij}$ (where i= 1, 2, 3; and j= 1 through n (where n>1))$\}$ of each color filter $F_i$ (where i= 1, 2, 3) and a spectrum $\{S_j$ (where j= 1 through n (where n>1))$\}$ of a label fluorochrome as shown in Fig. 3.

Note that the spectrum data $Y_i$ (where i= 1, 2, 3) of each label fluorochrome may be obtained from a color filter which is being used and a catalog value of label fluorochromes, or a measured value of a sample stained with a label fluorochrome which is being used.

An input apparatus 9 selects and inputs a label fluorochrome of an image (i.e., luminance data) to be separated from among label fluorochromes $R_k$ (where k≥1) according to a user instruction by way of a graphical user interface (GUI) and makes the storage apparatus 8 output spectrum data $Y_i$ (where i= 1, 2, 3) relating to the selected and input label fluorochrome to the processing unit 7.

A screen image output unit 10 outputs luminance data separated per each label fluorochrome by the processing unit 7 as an image separated per label fluorochrome.

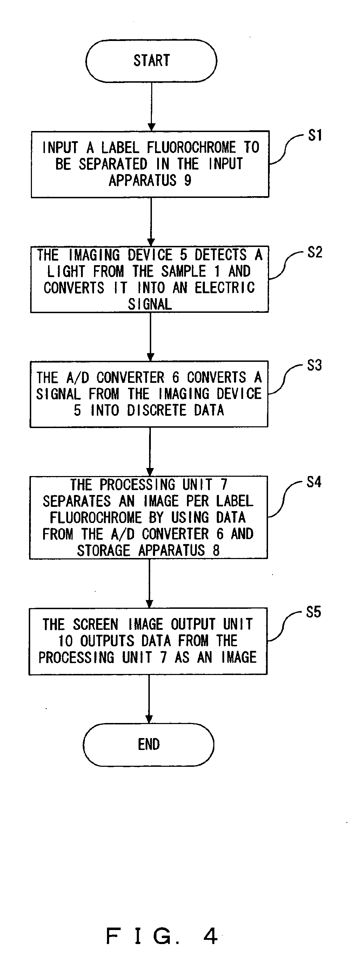

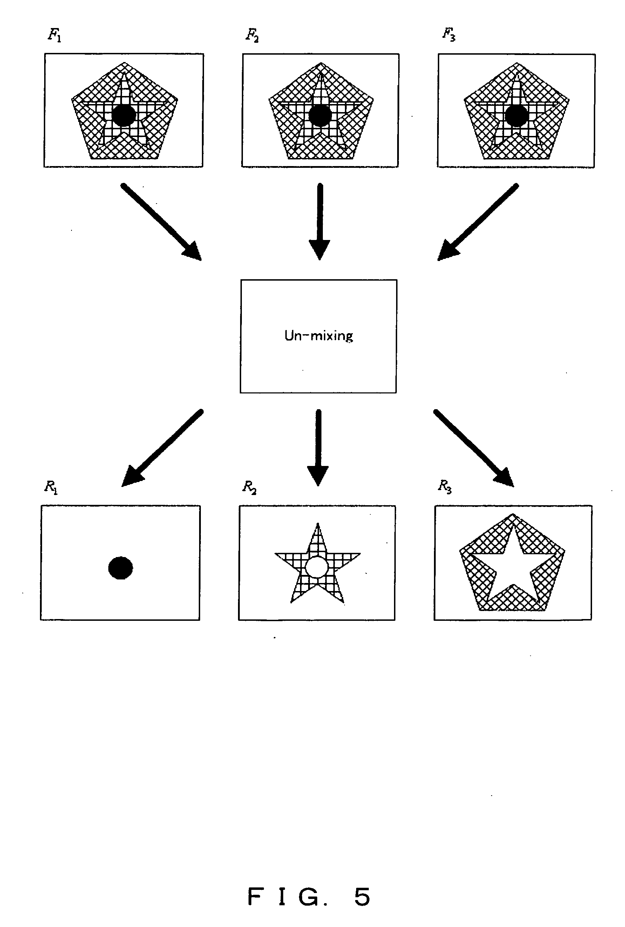

Referring to Figs. 4 and 5, the next description is of an operation when observing the above noted multiple fluorochrome-labeled sample 1 per each of label fluorochromes without a crosstalk as an operation of such configured camera apparatus.

Fig. 4 is a flow chart showing this operation.

As shown in Fig. 4, first, the input apparatus 9 selects and inputs a label fluorochrome of an image to be separated from among label fluorochromes $R_k$ (where k≥1) in the present operation according to an instruction from a user (step (simply "S1" hereinafter) 1). Note that the number of selectable label fluorochromes does not exceed the number of color filters included by the imaging device 1 according to convenience of a later described operation. The present embodiment is configured to include three color filters and therefore the number of selectable label fluorochromes is three or less. Here, the sample 1 is stained with three label fluorochromes $R_k$ (where k= 1, 2, 3), and therefore the assumption is that the three label fluorochromes $R_k$ (where k= 1, 2, 3) are selected.

Then the imaging device 5 detects light from the sample 1 emitting the light by an excitation light and outputs an electric signal per each of color filters $F_i$ (where i= 1, 2, 3) (S2). An A/D converter 6 subsequently converts the electric signal of each of the color filters $F_i$ (where i= 1, 2, 3) output from the imaging device 5 into discrete data (S3). This obtains an image (i.e., luminance data) separated per each of the color filters $F_i$ (where i= 1, 2, 3).

Subsequently, the processing unit 7 acquires, by an operation of the method of least squares, the $C_1$, $C_2$ and $C_3$ by which the $\varepsilon$ of the following expression (1) becomes a minimum, where luminance values of a pixel at the same position I in the separated images by the color filters $F_i$ (where i= 1, 2, 3) are $P_1$, $P_2$ and $P_3$, respectively, and outputs them to the screen image output unit 10, respectively, as luminance values of the pixel at the same position I.

$$\left\| \begin{pmatrix} P_1 \\ P_2 \\ P_3 \end{pmatrix} - A \times \begin{pmatrix} C_1 \\ C_2 \\ C_3 \end{pmatrix} \right\| = \varepsilon \quad \text{Expression (1)}$$

In the expression (1), the "A" is a spectrum data string $\{Y_{ik}$ (where i= 1, 2, 3; and k= 1, 2, 3)$\}$ which is obtained from the storage apparatus 8 according to an input by way of the input apparatus 9 as described above. Meanwhile, the calculation of $\|x\|$ is carried out as the following expression (2), assuming that the x is a vector consisting of $\{x_1, x_2,$ through $x_l\}$ (where l≥1):

$$\|x\| = \left( |x_1|^2 + |x_2|^2 + \cdots + |x_l|^2 \right)^{\frac{1}{2}} ; (l \geq 1) \quad \text{Expression (2)}$$

Incidentally, the expression (1) is derived from a relational expression of the following expression (3).

$$\begin{pmatrix} P_1 \\ P_2 \\ P_3 \end{pmatrix} = A \times \begin{pmatrix} C_1 \\ C_2 \\ C_3 \end{pmatrix}$$   Expression (3)

A detail for the expression (3) is noted in the above noted non-patent document 1.

The processing unit 7 applies such a process to all pixels of the same position in the images separated per each of the color filters $F_i$ (where i= 1, 2, 3) (S4). This makes the respective images constituted by the $C_1$, $C_2$ and $C_3$ become images (i.e., luminance data) separated per each of the label fluorochromes $R_k$ (where k= 1, 2, 3).

Such a process by the processing unit 7 in step S4 makes it possible to obtain images (i.e., luminance data) separated per each of label fluorochromes $R_k$ (where k= 1, 2, 3) from the images (i.e., luminance data) separated per each of the respective color filters $F_i$ (where i= 1, 2, 3) as shown in Fig. 5.

Following step S4, the screen output unit 10 outputs the images separated per each of the label fluorochromes $R_k$ (where k= 1, 2, 3) by the processing unit 7 (S5), thereby displaying the images separated per each of the label fluorochromes in real time and simultaneously.

As described above, the present embodiment is configured to equip a camera apparatus, which includes an imaging device having color filters $F_i$ (where i= 1, 2, 3) with different wavelength characteristics, with the function for separating an image per label fluorochrome, thereby making it possible to observe a multiple fluorochrome-labeled sample per label fluorochrome in real time and simultaneously without a crosstalk, which is also accomplished by a simple configuration and at a low cost.

Also, a label fluorochrome of an image to be separated can be selected from among label fluorochromes $R_k$ (where k≥1) by way of the input apparatus 9, enabling a response in the case of changing the sample 1 to one stained with a different label fluorochrome without changing a configuration.

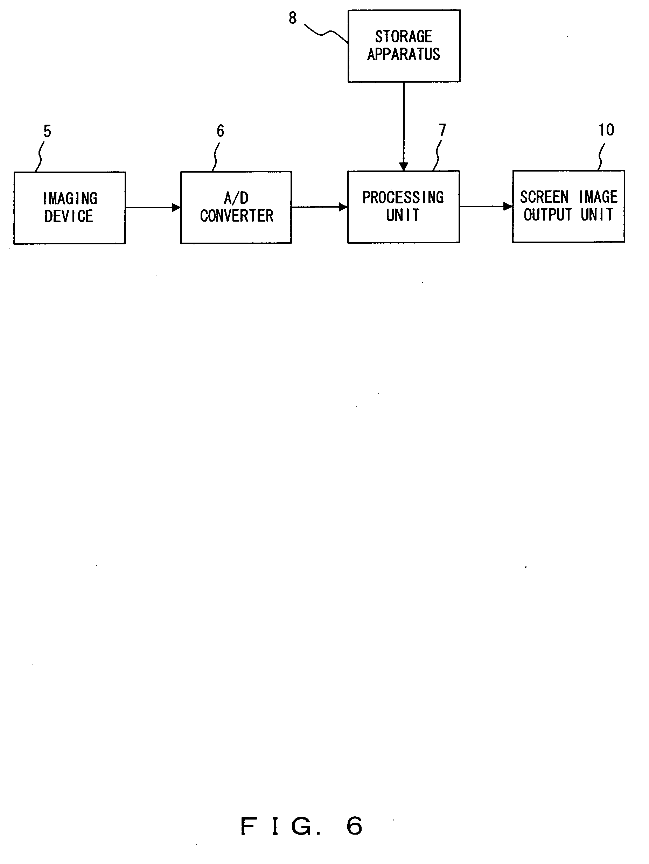

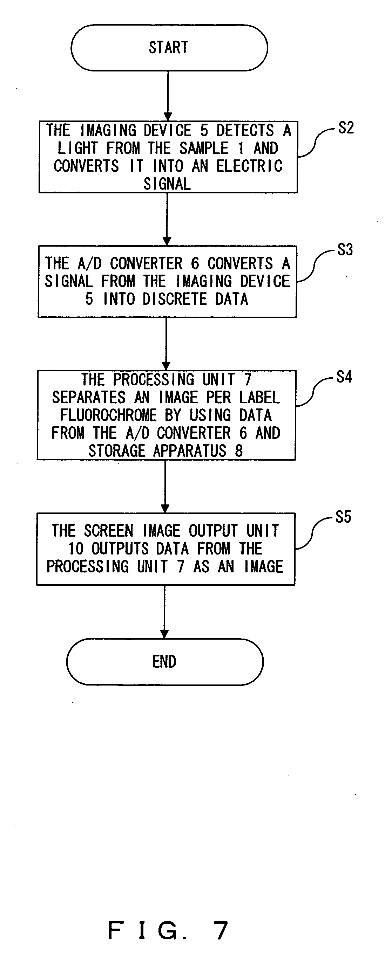

Note that the present embodiment can also be configured to eliminate the input apparatus 9 shown in Fig. 1 and store only spectrum data $Y_i$ (where i= 1, 2, 3) relating to label fluorochromes $R_k$ (where k= 1, 2, 3) staining the sample 1 in the storage apparatus 8 as shown in Fig. 6 in the case of not changing the sample 1 to another sample which is stained with a different label fluorochrome. An operation of such a configuration eliminates the process of step S1 shown in Fig. 4 and carries out a uniform operation by using spectrum data $Y_i$ (where i= 1, 2, 3) relating to the label fluorochromes $R_k$ (where k= 1, 2, 3) which are stored by the storage apparatus 8 in step S4 as shown in Fig. 7. This configuration makes it possible to provide a camera apparatus specialized for separating an image per label fluorochrome $R_k$ (where k= 1, 2, 3).

Also note that the above noted label fluorochromes use fluorescent fluorochromes such as GFP, CFP and YFP, or other fluorochromes for the present embodiment.

<Second embodiment>

A camera apparatus according to this embodiment is configured to further add the function, to the camera apparatus according to the first embodiment, of removing an influence of a background from an image which has been separated per label fluorochrome.

The configuration of the camera apparatus according to the present embodiment is the same as the camera apparatus according to the first embodiment (refer to Fig. 1), except that the input apparatus 9 is now configured to allow a further input of a background position of an image according to a user instruction by way of a GUI for example in the camera apparatus according to the present embodiment. And the processing unit 7 calculates spectrum data of the background from discrete data from the A/D converter and carries out an operation for separating luminance data into that of background and that per label fluorochrome from the discrete data (i.e., luminance data) of each color filter $F_i$ (where i= 1, 2, 3) by a method described later.

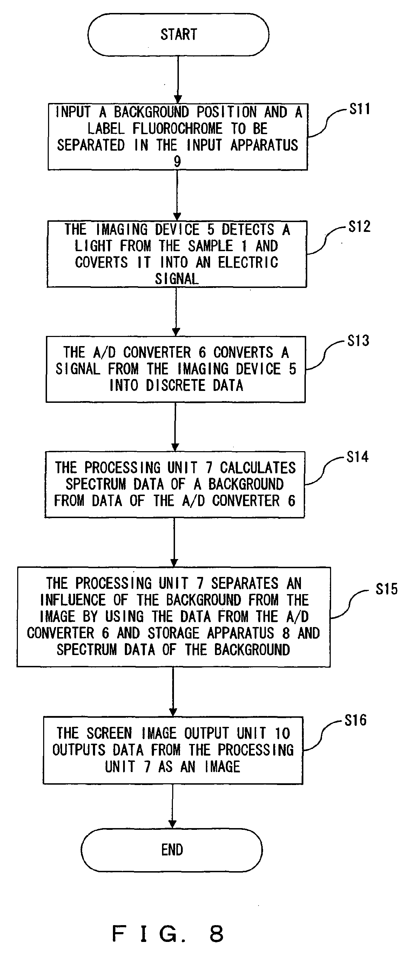

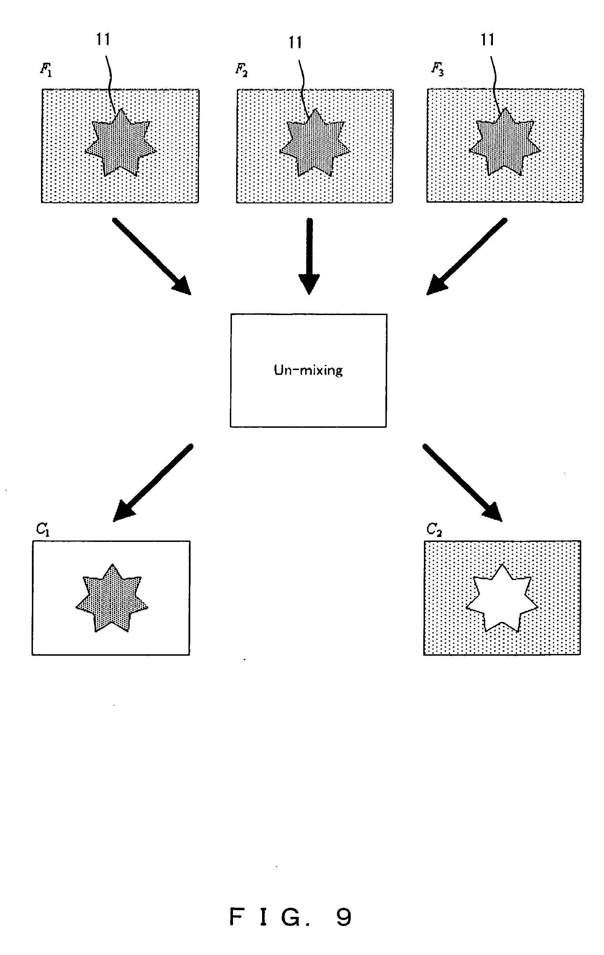

The next description is of an operation when removing an influence of a background from an image separated per label fluorochrome as an operation of the camera apparatus according to the present embodiment by using Figs. 8 and 9. The assumption here is that the sample 1 is stained with only one label fluorochrome R.

Fig. 8 is a flow chart showing the operation.

As shown in Fig. 8, the input apparatus 9 first inputs a background position $I_b$ of an image and the above noted label fluorochrome R as a label fluorochrome of an image to be separated according to an instruction of a user in the present operation (S11).

Note that the background position $I_b$ of an image is input as a point or an area. Also the present embodiment is configured to handle an image of a background as one of images to be separated per label fluorochrome as described later, and therefore the number of selectable (i.e., an input is allowed) label fluorochromes is one less the number of color filters of the imaging device 5. Since the present embodiment is configured to make the number of color filters as three as in the first embodiment, two (i.e., three minus one) or less of the label fluorochromes can be selected.

Subsequently, the imaging device 5 detects a light from the sample 1 emitting by an excitation light and outputs an electric signal of each of the color filters $F_i$ (where i= 1, 2, 3) (S12). Then the A/D converter 6 converts an electric signal of each of the color filters $F_i$ (where i= 1, 2, 3) output from the imaging device 5 into discrete data (S13). This obtains an image (i.e., luminance data) separated per each of the color filters $F_i$ (where i= 1, 2, 3).

Subsequently, the processing unit 7 calculates data $B_i$ (where i= 1, 2, 3) respectively normalizing luminance values of pixels at the background position $I_b$ which have been input in step S11 for the images separated per each of the color filters $F_i$ (where i= 1, 2, 3), and makes it the spectrum data of the background (S14).

Then the processing unit 7 constructs a spectrum data string A of the following expression (4) based on the spectrum data $Y_i$ (where i= 1, 2, 3) relating to the label fluorochrome R out of the storage apparatus 8 according to the input by the input apparatus 9 in step S11 and the spectrum data $B_i$ (where i= 1, 2, 3) of the background obtained in step S14:

$$A = \begin{pmatrix} Y_1 B_1 \\ Y_2 B_2 \\ Y_3 B_3 \end{pmatrix} \quad \text{expression (4)}$$

Then the processing unit 7 obtains, by an operation of the method of least squares, the $C_1$ and $C_2$ by both of which the $\varepsilon$ of the following expression (5) becomes a minimum, where luminance values of a pixel at the same position I in the images separated per each of the color filters $F_i$ (where i= 1, 2, 3) obtained in step S13 are P1, P2 and P3, respectively, in the same manner as the first embodiment, followed by outputting the $C_1$ and $C_2$ to the screen image output unit 10, respectively, as the luminance values of a pixel at the same position I.

$$\left\| \begin{pmatrix} P_1 \\ P_2 \\ P_3 \end{pmatrix} - A \times \begin{pmatrix} C_1 \\ C_2 \end{pmatrix} \right\| = \varepsilon \text{ expression (5)}$$

The processing unit 7 carries out such processes for all the pixels at the respective same position for the images separated per each of the color filters $F_i$ (where i= 1, 2, 3) (S15). This makes the respective images constituted by the $C_1$ and $C_2$ become images (i.e., luminance data) which are separated into the respective label fluorochrome R and backgrounds, thereby removing an influence of the background from the image of the label fluorochrome R.

Such processes by the processing unit 7 in step S14 and S15 makes it possible to obtain images (i.e., luminance data) separated into the label fluorochrome R and background from the images (i.e., luminance data) separated per each of the color filters $F_i$ (where i= 1, 2, 3), as shown by Fig. 9. Incidentally, referring to the image separated per each of the color filters $F_i$ (where i= 1, 2, 3) shown in Fig. 9, the numerical sign 11 indicates an area of the sample 1 stained with the label fluorochrome R, while other areas indicate that of the background.

Following step S15, the screen image output unit 10 outputs the images separated into those of the label fluorochrome R and background by the processing unit 7 (S16). By so doing, the images separated into the label fluorochrome R and background are displayed.

As described above, the present embodiment makes it possible to remove an influence of a background within an image of a label fluorochrome R.

Note that, in the case of staining the sample 1 with a plurality of label fluorochromes followed by the input apparatus 9 inputting two label fluorochromes $R_k$ (where k= 1, 2) from among them as label fluorochromes of an image to be separated in step S11 in the present embodiment, images separated into those of a background and the label fluorochromes $R_k$ (where k= 1, 2). This configuration makes it possible to remove an influence of the background from the images separated per each of the label fluorochromes $R_k$ (where k= 1, 2).

The present embodiment may also be configured to perform an operation as in the following as an operation for removing an influence of a background from an image separated per each label fluorochrome. That is, the processing unit 7 acquires an area (i.e., a background area) having the same or approximately the same luminance as that of the background position which has been input by the input apparatus 9 according to a user instruction in step S11 and remove the area from the respective images separated per each of the color filters $F_i$ (where i= 1, 2, 3) by the process of S13, followed by carrying out the same process as the first embodiment, thereby obtaining an image separated per label fluorochrome from the image which is separated per each of the color filters $F_i$ (where i= 1, 2, 3) and which the background area is removed from. Such an operation also makes it possible to remove an influence of a background from an image separated per label fluorochrome.

Also note that the above noted label fluorochromes use fluorescent fluorochromes such as GFP, CFP and YFP, or other fluorochromes, for the present embodiment.

Despite that the present invention is described in detail so far, the present invention can apparently be improved or changed in various manners within the scope thereof, in lieu of being limited by the above described embodiments.

As such, the present invention is configured to equip a camera apparatus, which includes an imaging device having a plurality of color filters with different wavelength characteristics, with the function for separating an image per label fluorochrome, thereby enabling an observation of a multiple fluorochrome-labeled sample per label fluorochrome in real time and simultaneously without a crosstalk, which can be accomplished by a simple configuration at a low cost.

**Claims**

1.  A camera apparatus, comprising:

    an imaging device (5) which includes a plurality of color filters with respective wavelength characteristics;
    a processing unit (7) for carrying out an operation for separating luminance data per each label fluorochrome from the luminance data of each of the color filters by using the luminance data of each of the color filters which is obtained by the imaging device (5) imaging a sample stained with a plurality of label fluorochromes having respective wavelength characteristics and using spectrum data relating to the label fluorochrome obtained based on a spectrum of the label fluorochrome and that of each of the color filters; and
    an output unit (10) for outputting luminance data separated per each of the label fluorochromes by the operation of the processing unit (7) as an image which is separated per each of the label fluorochromes.

2.  The camera apparatus according to claim 1, further comprising
    a storage unit (8) for storing spectrum data relating to a plurality of label fluorochromes at least comprising said label fluorochrome.

3.  The camera apparatus according to claim 2,
    further comprising an input unit (9) for selecting, and inputting, a label fluorochrome, and
    making spectrum data, which is stored in said storage unit (8) and which relates to the label fluorochrome input by the input unit (9), as spectrum data relating to a label fluorochrome used for the operation by said processing unit (7).

4.  A camera apparatus, comprising:

    an imaging device (5) which includes a plurality of color filters with respective wavelength characteristics;
    a processing unit (7) for carrying out an operation for separating luminance data into that of a background and that of each label fluorochrome from luminance data of each of the color filters by using luminance data of each of the color filters obtained by the imaging device (5) imaging a sample stained with a plurality of label fluorochromes having respective wavelength characteristics, spectrum data of a background obtained by normalizing luminance data of each of the color filters for a pixel at a background position and spectrum data relating to the label fluorochrome obtained based on a spectrum of the label fluorochrome and that of each of the filters; and
    an output unit (10) for outputting luminance data separated into that of the background and that of each of the label fluorochromes by the operation of the processing unit (7) as an image which is separated into that of the background and that of each of the label fluorochromes.

5.  A data output method for a camera apparatus, comprising:

    imaging a sample stained with a plurality of label fluorochromes having respective wavelength characteristics by using an imaging device (5) having a plurality of color filters of respective wavelength characteristics;
    carrying out an operation for separating luminance data per each label fluorochrome from the luminance data of each of the color filters by using the luminance data of each of the color filter which is obtained by the imaging, and using spectrum data relating to the label fluorochrome obtained based on a spectrum of the label fluorochrome and that of each of the color filters; and

outputting luminance data separated per each of the label fluorochromes by the operation as an image which is separated per each of the label fluorochromes.

6. The data output method for the camera apparatus according to claim 5, wherein
a storage unit (8) of the camera apparatus stores spectrum data relating to a plurality of label fluorochromes at least including said label fluorochrome.

7. The data output method for the camera apparatus according to claim 6,
selecting and inputting a label fluorochrome, and
making spectrum data, which is stored in said storage unit (8) and which relates to the label fluorochrome input, as spectrum data relating to a label fluorochrome used for the operation.

F I G.  1

FIG. 2

SPECTRUM DATA $Y_i$ (WHERE $i=1, 2, 3$) OF LABEL DYE $R$

SPECTRUM OF COLOR FILTER $F_i$

$Y_i$ =

SENSITIVITY

1

0 $X_1, X_2, \cdots$

WAVE-
LENGTH

×

SPECTRUM OF LABEL FLUOROCHROME $R$

SENSITIVITY

1

0 $S_1, S_2, \cdots$

WAVE-
LENGTH

= $X_1 \times S_1 + X_2 \times S_2 \cdots$

F I G.  3

START

INPUT A LABEL FLUOROCHROME TO BE SEPARATED IN THE INPUT APPARATUS 9 — S1

THE IMAGING DEVICE 5 DETECTS A LIGHT FROM THE SAMPLE 1 AND CONVERTS IT INTO AN ELECTRIC SIGNAL — S2

THE A/D CONVERTER 6 CONVERTS A SIGNAL FROM THE IMAGING DEVICE 5 INTO DISCRETE DATA — S3

THE PROCESSING UNIT 7 SEPARATES AN IMAGE PER LABEL FLUOROCHROME BY USING DATA FROM THE A/D CONVERTER 6 AND STORAGE APPARATUS 8 — S4

THE SCREEN IMAGE OUTPUT UNIT 10 OUTPUTS DATA FROM THE PROCESSING UNIT 7 AS AN IMAGE — S5

END

F I G.  4

F I G. 5

8

STORAGE
APPARATUS

5

IMAGING
DEVICE

6

A/D
CONVERTER

7

PROCESSING
UNIT

10

SCREEN IMAGE
OUTPUT UNIT

F I G. 6

START

THE IMAGING DEVICE 5 DETECTS A LIGHT FROM THE SAMPLE 1 AND CONVERTS IT INTO AN ELECTRIC SIGNAL — S2

THE A/D CONVERTER 6 CONVERTS A SIGNAL FROM THE IMAGING DEVICE 5 INTO DISCRETE DATA — S3

THE PROCESSING UNIT 7 SEPARATES AN IMAGE PER LABEL FLUOROCHROME BY USING DATA FROM THE A/D CONVERTER 6 AND STORAGE APPARATUS 8 — S4

THE SCREEN IMAGE OUTPUT UNIT 10 OUTPUTS DATA FROM THE PROCESSING UNIT 7 AS AN IMAGE — S5

END

# F I G.   7

START

INPUT A BACKGROUND POSITION AND A LABEL FLUOROCHROME TO BE SEPARATED IN THE INPUT APPARATUS 9 — S11

THE IMAGING DEVICE 5 DETECTS A LIGHT FROM THE SAMPLE 1 AND COVERTS IT INTO AN ELECTRIC SIGNAL — S12

THE A/D CONVERTER 6 CONVERTS A SIGNAL FROM THE IMAGING DEVICE 5 INTO DISCRETE DATA — S13

THE PROCESSING UNIT 7 CALCULATES SPECTRUM DATA OF A BACKGROUND FROM DATA OF THE A/D CONVERTER 6 — S14

THE PROCESSING UNIT 7 SEPARATES AN INFLUENCE OF THE BACKGROUND FROM THE IMAGE BY USING THE DATA FROM THE A/D CONVERTER 6 AND STORAGE APPARATUS 8 AND SPECTRUM DATA OF THE BACKGROUND — S15

THE SCREEN IMAGE OUTPUT UNIT 10 OUTPUTS DATA FROM THE PROCESSING UNIT 7 AS AN IMAGE — S16

END

F I G. 8

F I G. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• JP 8062123 A

### Non-patent literature cited in the description

• **M.E. DICKINSON ; G. BEARMAN ; S. TILLE1 ; R. LANSFORD ; S.E. FRASER.** Multi-Spectral Imaging and Linear Unmixing Add a Whole New Dimension to Laser Scanning Fluorescence Microscopy. *Bio-Techniques,* 2001, vol. 31 (6), 1272-1278